# EUROPEAN PATENT SPECIFICATION

(11) **EP 4 115 485 B1**
(45) Date of publication and mention of the grant of the patent: **13.03.2024**
(21) Application number: 20720024.7
(22) Date of filing: 17.04.2020
(51) Int. Cl.: H02J 3/06, H02J 3/36

(54) **A VOLTAGE LINK ARRANGEMENT BETWEEN POWER DISTRIBUTION GRIDS**
SPANNUNGSVERBINDUNGSANORDNUNG ZWISCHEN STROMVERTEILUNGSNETZEN
AGENCEMENT DE LIAISON DE TENSION ENTRE DES RÉSEAUX DE DISTRIBUTION D'ÉLECTRICITÉ

(43) Date of publication of application: 11.01.2023
(73) Proprietor: Hitachi Energy Ltd, 8050 Zürich (CH)
(72) Inventor: MAJUMDER, Ritwik, 723 44 Västerås (SE)
(74) Representative: AWA Sweden AB
(86) International application number: PCT/EP2020/060800
(87) International publication number: WO 2021/209144

(56) References cited:
- CN-A- 107 086 574
- US-A1- 2018 166 881
- MARTIN WITNESS A ET AL: "Investigation of low-voltage solid-state DC breaker configurations for DC microgrid applications", 2016 IEEE INTERNATIONAL TELECOMMUNICATIONS ENERGY CONFERENCE (INTELEC), IEEE, 23 October 2016 (2016-10-23), pages 1-6, XP033009683, DOI: 10.1109/INTLEC.2016.7749139 [retrieved on 2016-11-18]

## Description

### Field of the Invention

The present invention relates to a voltage link arrangement between power distribution grids. The present invention further relates to a control unit configured to control a voltage link arrangement between power distribution grids, and to a method for controlling a voltage link arrangement connected between power distribution grids.

### Background

Distributed electrical power networks are provided for distribution of electrical power from a power generation source such to various infrastructures. In such distributed networks, a medium voltage network is often connected to a high voltage network at a primary substation. The medium voltage network is connected to, for example, remote distribution grids via switches at radial feeder lines of the medium voltage network.

The switches may be controlled to connect and disconnect the medium voltage network to/from the remote distribution grids. The switches may for example disconnect the remote distribution grid from the medium voltage distribution grid in the event of a fault or other conditions.

However, it is desirable to improve the performance of the connections between distribution grids to improve the controllability of the connection and provide a smooth changeover between different connection states.

An example of prior art may be found in CN107086574 relating to an access circuit of trend control device and a control method of access circuit and trend control system.

### Summary

In view of the above-mentioned and other drawbacks of the prior art, it is an object of the present invention to provide a voltage link arrangement that alleviates at least some of the drawbacks with prior art. The proposed voltage link arrangement provides for improved control of the connection between distribution grids by operating the voltage link arrangement based on operation information indicating operation status of at least one of the power distribution grids it is connected to. The invention is set out in the appended set of claims.

According to a first aspect of the invention, there is provided a voltage link arrangement connectable between power distribution grids, the voltage link arrangement comprising: a medium-voltage direct current (MVDC) link connectable to a first power distribution grid and a second power distribution grid, and a breaker arranged in parallel with the MVDC-link and connectable to the first power distribution grid and the second power distribution grid, wherein the voltage link arrangement is operable in at least: a first mode where the breaker is closed, a second mode where the MVDC-link is closed and the breaker is open, and a third mode where the breaker and the MVDC-link are open, wherein the voltage link arrangement is responsive to switch between modes based on operation information indicating operation status of at least one of the first power distribution grid and the second power distribution grid.

The present invention is at least partly based on the realization that the voltage link arrangement is controllable to be in one of the three modes based on operation information received from one or both of the first power distribution grid and the second power distribution grid. This provides for the voltage link arrangement to connect the power distribution grids with various degree of controllability by selecting the appropriate mode to ensure e.g. power balance, voltage regulations, islanding and resynch coordinating with upstream grid controller and downstream network controller if such is present.

Operation information may relate to any status that may have an effect on the operation of the power distribution grids. For example, such status may relate to a fault in one of the power distribution grids, power quality such as related to voltage and electrical current levels, reactive power levels, power flow levels between the power distribution grids, or any other status that may have an effect on the type of electrical connection that is suitable between the power distribution grids. Thus, the voltage link arrangement is responsive to switch between modes based on operation information indicating operation status that may cause an operation that is presently undesirable.

A breaker herein should be interpreted broadly as a device that is operable to conduct electrical current between the power distribution grids when it is closed, and to not conduct electrical current between the power distribution grids when it is open.

A medium voltage direct current link, hereinafter a MVDC-link, is configured to enable power exchange between the power distribution grids. When the MVDC-link is open it is operable to not conduct electrical current between the power distribution grids. In the first mode, the primary functionality is that the breaker is closed and therefore provides a power transfer path between the power distribution grids. The MVDC-link may be electrically connected between the grids but is not transferring power between the power distribution grids. For example, the MVDC-link may be energized, i.e. operative but being passive, and the power reference is set to zero meaning that no power is being transferred by the MVDC-link.

A power distribution grid is a grid network distributing power to infrastructure or to other grid networks. A power distribution grid may be connected to a substation. The first power distribution grid may for example be upstream of the second power distribution grid, where the first distribution grid is connected to a high-voltage network via a transformer in a primary substation. The second power distribution grid may be a remote grid distributing power to infrastructure.

The first mode may be a grid connected mode where the power distribution grids are connected via the breaker. The first mode may be considered a normal operation mode for the voltage link arrangement.

The third mode is an island mode where none of the MVDC-link and the breaker provides a power transfer path between the power distribution grids. In other words, the downstream grid, e.g. the second power distribution grid and the upstream power distribution grid, e.g. the first power distribution grid, are isolated from each other.

The second mode is a semi-island mode where the power transfer between the first power distribution grid and the second power distribution grid is via the MVDC-link. In this way, the power transfer may be controllable using e.g. power converters of the MVDC-link. For example, the in the second mode, the MVDC-link may be configured to transfer at least one of active power and reactive power. This provides for an asynchronous connection between the power distribution grids which may be needed for different power quality requirements.

The MVDC-link may be operable to control the voltage link arrangement to switch between modes. In other words, the MVDC-link is able to control both itself and the breaker for switching the voltage link arrangement between the different modes. Thus, the MVDC-link receives the operation information and based on the operation information, may control the voltage link arrangement to operate in one of the modes.

The MVDC-link may advantageously include a control unit configured to receive the operation information and based on the operation information, control the voltage link arrangement to operate in one of the modes.

A switching operation from one of the first mode and the third mode, to the other one of the first mode and the third mode, may advantageously be performed via the second mode. Thus, when the voltage link arrangement is switched from one of the first mode and the third mode, to the other one of the first mode and the third mode, the voltage link arrangement is configured to make the switch via the second mode. This provides for a smooth changeover from one of the first mode and the third mode, to the other one of the first mode and the third mode which reduces the number and magnitude of transients that may occur from switching between modes.

The voltage link arrangement may be maintained in the second mode for a time duration before completing the switching operation. In other words, the voltage link arrangement is controllable to be maintained in the second mode for a time duration, where the time duration depends on the operation information. For example, in case of a fault in one of the power distribution modes, the time duration is relatively short compared to the time duration in case of a pre-scheduled or planned switching operation.

Accordingly, the time duration may for example be based on operation information for the at least one of the first power distribution grid and the second power distribution grid.

In embodiments, the voltage link arrangement may be configured to operate in the third mode in response to operation information indicating a fault in one of the first power distribution grid and the second power distribution grid. Thus, the faulty power distribution grid may be isolated such that the fault may be resolved safely.

In embodiments, the voltage link arrangement may be configured to operate in the second mode in response to operation information indicating that one of the first power distribution grid and the second power distribution grid requests re-energization from the other one of the first power distribution grid and the second power distribution grid. For this, the MVDC-link may advantageously comprise power converters, such as at least two power converters. For example, after one of the distribution grids being isolated, it may need to be re-energized before being fully operational. This may advantageously be made via the MVDC-link. For this, in the second mode, the MVDC-link may be configured to transfer at least one of active power and reactive power.

The power converters of the MVDC-link may be connected in a back-to-back or point-to-point configuration, or a combination thereof.

Back-to-back refer to a configuration where two converters are connected to each other at their DC sides, with their DC bus. In such case, no cable is needed between the converter. For point-to-point configuration, the converters are separated from each other and are therefore connected with a DC cable between them. Thus, in a back-to-back configuration, the converters are in the same location, and in a point-to-point configuration they may be located far from each other.

The power converters may be of voltage source converter type

According to a second aspect of the invention, there is provided a control unit configured to control a voltage link arrangement connectable between power distribution grids to operate in one of at least three modes, voltage link arrangement comprising: a medium-voltage direct current (MVDC) link connectable to a first power distribution grid and a second power distribution grid, and a breaker arranged in parallel with the MVDC-link and connectable to the first power distribution grid and the second power distribution grid, wherein the control unit is configured to receive operation information indicating operation status of at least one of the first power distribution grid and the second power distribution grid, and to control the voltage link to operate in one of: a first mode where the breaker is closed, a second mode where the MVDC-link is closed and the breaker is open, and a third mode where the breaker and the MVDC-link are open, based on the received operation information.

The control unit may be configured to control the voltage link arrangement to switch from one of the first mode and the third mode, to the other one of the first mode and the third mode, via the second mode.

The control unit may be configured to maintain the voltage link arrangement in the second mode for a time duration.

Further effects and features of the second aspect of the invention are largely analogous to those described above in connection with the first aspect of the invention.

According to a third aspect of the invention, there is provided a method for controlling a voltage link arrangement connected between power distribution grids to operate in one of at least three modes, voltage link arrangement comprising: a medium-voltage direct current (MVDC) link connectable to a first power distribution grid and a second power distribution grid, and a breaker arranged in parallel with the MVDC-link and connectable to the first power distribution grid and the second power distribution grid, the method comprising: acquiring operation information indicating operation status of at least one of the first power distribution grid and the second power distribution grid, and controlling the voltage link arrangement to operate in one of the at least three modes based in the acquired operation information.

The method may comprise switching from one of the first mode and the third mode, to the other one of the first mode and the third mode, via the second mode.

The voltage link arrangement may be maintained in the second mode for a time duration.

Further effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a box-diagram conceptually illustrating a voltage link arrangement connectable between power distribution grids according to an embodiment of the invention;
Fig. 2 conceptually illustrates a first power distribution grid electrically connectable to a second power distribution grid via a voltage link arrangement according to an embodiment of the invention;
Fig. 3 conceptually illustrates an embodiment where the MVDC-link is operable to control the voltage link arrangement 100 to switch between modes according to an embodiment of the invention;
Fig. 4 is a schematic timing diagram indicating a switching operation from the first mode to the second mode according to an embodiment of the invention;
Fig. 5 conceptually illustrates a first power distribution grid electrically connectable to a second power distribution grid via a voltage link arrangement according to an embodiment of the invention;
Fig. 6 conceptually illustrates a first power distribution grid electrically connectable to a second power distribution grid via a voltage link arrangement according to an embodiment of the invention;
Fig. 7 conceptually illustrates a first power distribution grid electrically connectable to a second power distribution grid via a voltage link arrangement according to an embodiment of the invention;
Fig. 8 is a box-diagram conceptually illustrating a voltage link arrangement connectable between power distribution grids according to an embodiment of the invention; and
Fig. 9 is a flow-chart of method steps according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

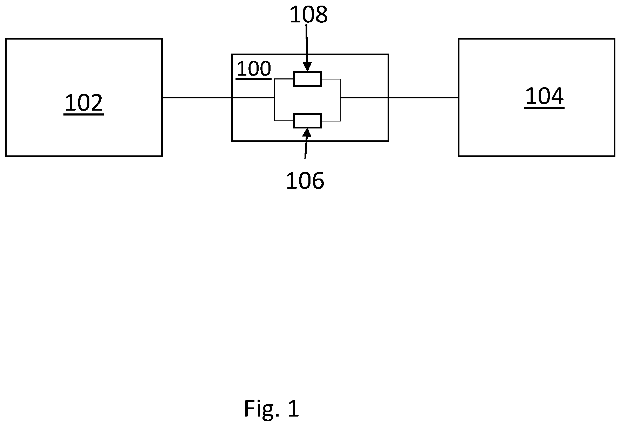

Fig. 1 is a box-diagram conceptually illustrating a voltage link arrangement 100 connectable between power distribution grids 102 and 104.

The voltage link arrangement 100 comprises a medium-voltage direct current (MVDC) link 106 connectable to the first power distribution 102 grid and the second power distribution grid 104.

The voltage link arrangement 100 further comprises a breaker 108 arranged in parallel with the MVDC-link 108 and connectable to the first power distribution grid 102 and the second power distribution grid 104. The breaker 108 and the MVDC-link 106 are electrically connected in parallel.

The voltage link arrangement is operable in at least three modes.

A first mode where the breaker 108 is closed. In this mode, the breaker is in a state where it is operable to conduct electrical current between the power distribution grids 102, 104.

A second mode where the MVDC-link 106 is closed and the breaker 108 is open. Thus, MVDC-link 106 is in a state where it is operable to conduct electrical current between the power distribution grids 102, 104.

A third mode where the breaker and the MVDC-link 106 are open. Thus, the first power distribution grids 102 and 104 are electrically isolated from each other.

The voltage link arrangement 100 is responsive to switch between modes based on operation information indicating operation status of at least one of the first power distribution grid 102 and the second power distribution grid 104.

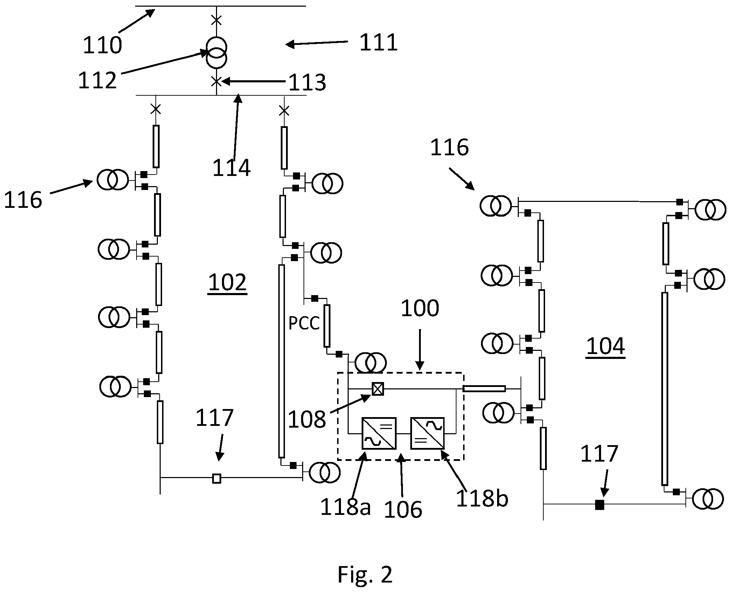

Fig. 2 conceptually illustrates a first power distribution grid 102 electrically connectable to a second power distribution grid 104 via a voltage link arrangement 100.

The first power distribution grid may receive electrical power from a further grid or power source transferred via distribution line 110 and transformed at a substation comprising a transformer 112. For example, the distribution line 110 may be a cable transferring high voltage to the transformer 112 which transforms the high voltage to a medium voltage. The transformer 112 is connected to the bus bar 114 of the first power distribution grid 102 via breaker 113. The substation may further comprise switches and other components that will not be described in further details herein.

The first and second power distribution grids each comprise a number of radial feeders 116 each including transformers and other components to distribute electrical power to further grids or infrastructure, such as switches 117.

The voltage link arrangement comprises the breaker 108 electrically in parallel with the MVDC-link 106. In this example embodiment, the MVDC-link comprises two power converters 118a-b. The power converters 118a-b are connected in a back-to-back configuration. Other connection configurations are conceivable such as a point-to-point configuration.

The power converters may be voltage source converters type which, as is known to the skilled person, can be controlled to transfer a fixed amount of active and reactive power, or a fixed amount of active power and AC voltage. For example, in the first mode, the voltage source converters may be controlled to define the AC grid voltage.

Voltage source converters are provided in various forms and are known *per se*. For example, two level converters, three level converters, and modular multilevel converters. Generally, voltage source converters most commonly comprises insulated-gate bipolar transistors in different configurations. Insulated-gate bipolar transistors can be actively controlled to be in both an "on-state", and in an "off-state", which allows for the voltage source converters to be controlled according to different schemes.

The breaker 108 may be any type of breaker suitable for medium voltage applications at substations of power distribution grids. Example breakers include air insulated breaker and gas insulated breakers or generally air or gas insulated medium voltage switchgear. Medium voltage is in the range of about 1 kV to 72 kV.

The first mode is a grid connected mode in which the main grid, e.g. the first power distribution grid 102 is connected to the downstream second port distribution grid 104 with the breaker 108 closed. This is considered a normal operation mode.

The second mode is a semi-island mode in which the breaker 108 is open and thus does not conduct current between the power distribution grids 102 and 104. The MVDC-link may be configured to transfer at least one of active power and reactive power in the second mode.

The third mode is an island mode where both the MVDC-link 106 and the breaker 108 are open. In this third mode, the downstream grid, here the second power distribution grid 104, is operated in an island condition where it is isolated from the first power distribution grid 102.

In preferred embodiments, the MVDC-link includes circuitry for controlling the selection of operation mode for the voltage link arrangement 100.

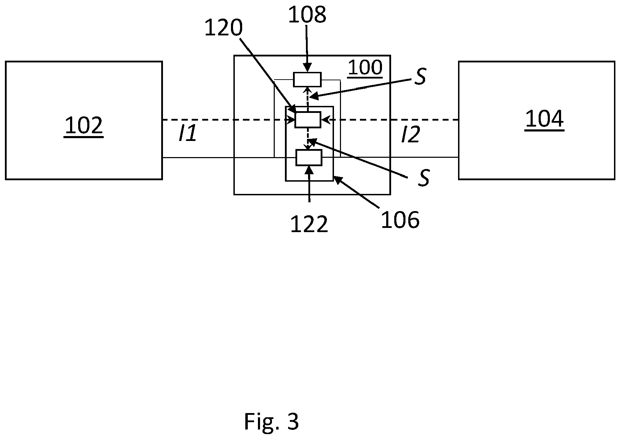

Fig. 3 conceptually illustrates an embodiment where the MVDC-link 106 is operable to control the voltage link arrangement 100 to switch between modes. For this, the MVDC-link 106 includes a control unit 120 configured to receive the operation information 11 and/or 12 and based on the operation information, control the voltage link arrangement 100 to operate in one of the modes. More specifically, the control unit 120 is arranged to receive a signal 11 from the first power distribution grid 102 and to receive a signal 12 from the second power distribution grid 104. The control unit 120 is configured to process the signals I1 and I2 and evaluate the operation status of the power distribution grids and based on the evaluation control the power converters 122 of the MVDC-link 106 and the breaker 108 to operate in a closed or open state depending on in which operation mode the voltage link arrangement should operate. The control unit 120 is communicative connected with the power converters 122 and with the breaker 108 so that the control unit may send control signals S to control them. The control unit may further check that present state of the power converters 122 and the breaker 108, e.g. whether they are open or closed.

The control unit 120 may receive operation information from SCADA/DMS and measurements or operation information from the downstream power distribution grid, the MVDC control unit 120 selects the mode (grid connect, island or semi-island) and take necessary actions.

Preferably, the control unit 120 of the voltage link arrangement 100 is connected to a controller of the upstream power distribution grid 102 receive information therefrom.

Thus, the control unit 120 of the voltage link arrangement 100 may be configured to receive information from the grid controller, such as a distribution management system (DMS) or a supervisory control and advisory data acquisition (SCADA) of the downstream power distribution grid 104 and send information thereto regarding in which mode the MVDC-link is presently operating. Further the control unit 120 may receive measurement data (local or remote) from the downstream power distribution grid 104. The measurement may be local meaning that the point of measurement is nearby the MVDC-link. Further, remote measurements may relate to measurement that are further downstream in the downstream power distribution grid 104, i.e. remotely from the MVDC-link.

In case the power distribution grids have distributed energy resources, operation information from such resources, e.g. power generation, voltage, reactive power, connection status etc., may also be received by the control unit 120.

Further, the control unit 120 may receive information from a network controller, one such a network controller is present (if any) from the downstream power distribution grid 104 and send status to the MVDC controller.

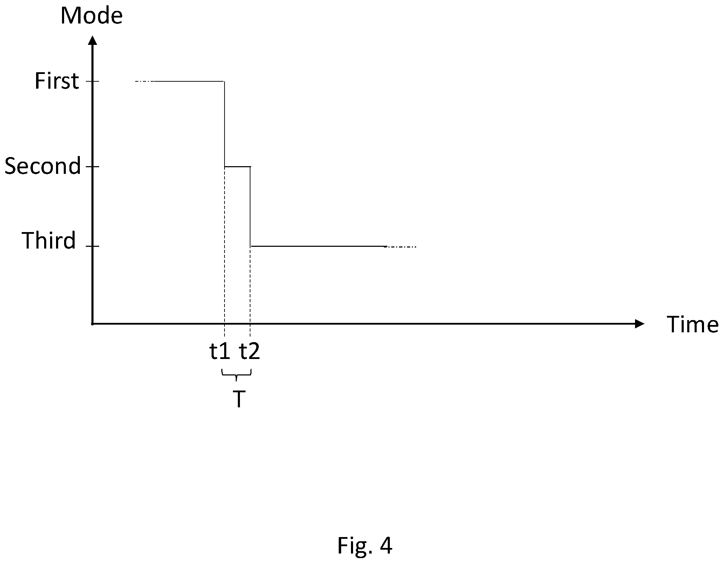

Fig. 4 is a schematic timing diagram indicating a switching operation from the first mode to the third mode. Switching from the third mode to the first mode may be performed according to an analogous timing diagram but instead of switching from the first mode to the third mode as exemplified in fig. 4, the switching operation may be performed from the third mode to the first mode. In fig. 4, the voltage link arrangement is assumed to initially be in the first mode, i.e. a grid connected mode where the power distributions grids 102 and 104 are in normal operation. At time t1, the voltage link arrangement is controlled to switch to the third mode, however, the switching operation is performed so that the switching is performed via the second mode. According to this example diagram, the voltage link arrangement is maintained in the second mode for a time duration T before completing the switching operation. The time duration T is from t1 to t2. By allowing the voltage link-arrangement to maintain in the second mode for a time duration T, a smooth changeover is possible with reduced transients that may otherwise occur. However, it is understood that a switching operation may be performed directly from the first mode to the third mode, for example in the case of faults in the second power operation 104 grid that requires a fast isolation of the second power operation 104.

The time duration T may be based on operation information (11, I2) for the at least one of the first power distribution grid and the second power distribution grid.

Switching between the first mode and the third mode may thus be made in different ways and at different speeds. For example, for an unplanned third mode (i.e. island mode) the voltage link arrangement 100 may switch directly from the first mode to the third mode within 100-150 ms. However, in case of a planned island mode and resynchronization as will be described below, the switching operation is not needed to be exceptionally fast but may be performed in less than 200 ms if needed.

A switching operation may be performed by sequentially operating the breaker 108 and the MVDC-link 106. For example, starting from the first mode with the breaker 108 closed, the switching operation may preferably be initiated by closing the MVDC-link, and subsequentially opening the breaker 108, whereby the second mode is reached. Alternatively, the switching operation may be initiated by opening the breaker 108, and subsequentially closing the MVDC-link whereby the second mode is reached. Subsequently, the MVDC-link is opened, whereby the third mode is reached.

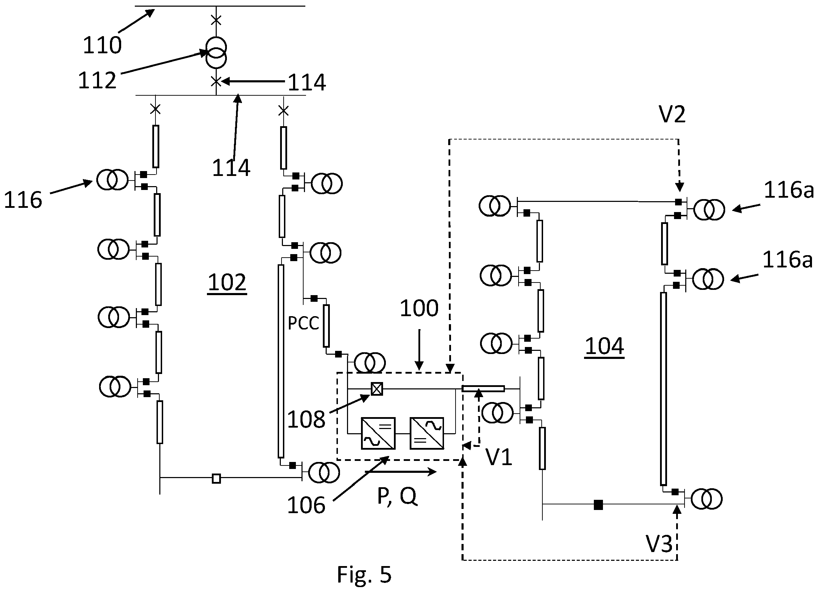

Fig. 5 illustrates one possible implementation where the downstream power distribution grid 104 is a remote power distribution grid 104. "Remote" refers to that the downstream power distribution grid 104 is geographically far from the primary substation 111 where the transformer 112 is located. A remote location may be a location that is not at the connection point of the MVCD-link, e.g. any distance that requires communication to travel to the MVDC-link for it to receive operation information. For a medium voltage grid, the distance of the remote location may be e.g. from 1 km to 20 km. The voltage regulation challenges in a remote distribution power grid 104 with long feeders 116a requires the MVDC-link 106 to regulate voltage, improve power capacity in parallel feeders 116a, configure the voltage link 100 to operate in the third mode, i.e. island mode, and resynch when necessary. The MVDC-link control unit 120 may receive local signals V1 and remote signals V2 and V3 from the downstream power distribution grid 104 to determine the operation mode of the voltage link arrangement 100.

For example, if the remote power distribution grid 104 is a passive grid, then the remote power distribution grid 104 is not operable in the island mode without shutting down the remote power distribution grid 104. Thus, if the remote power distribution grid 104 is a passive grid and is set in the island mode, then the MVDC-link 106 may be operative to re-energize the remote power distribution grid 104 in the second mode.

The voltage link arrangement 100 may be configured to operate in the third mode, i.e. the island mode in response to operation information indicating a fault in one of the first power distribution grid 102 and the second power distribution grid 104. Thus, in case of a fault in any one of the power distribution grids 102, 104, the control unit 120 may control the voltage link arrangement 100 to switch to the third mode, i.e. to isolate the grids 102, 104 from each other.

Further, in case the operation information indicates that there is a change in demand in the remote power distribution grid 104, the voltage link arrangement may be controlled to operate in the second mode in which the MVDC-link may actively regulate the power transfer to the remote power distribution grid 104 from the first power distribution grid 102.

Further, there may occur a change in voltage profile in the remote power distribution grid 104, as may be indicated in the operation information, which may cause the voltage link arrangement 100 to switch to the second mode in which the MVDC-link 108 may be operative to assist in energization to reduce inrush power into the first power distribution grid 102 from the remote power distribution grid 104. A voltage profile refers to how the voltage changes from PCC (point of common contact), where the MVDC-link 106 is connected to the far end of the downstream grid. Energization is a process often called black start where the MVDC-energizes the grid 104.

Thus, the voltage link arrangement 100 is configured to operate in the second mode in response to operation information indicating that one of the first power distribution grid 102 and the second power distribution grid 104 requests re-energization from the other one of the first power distribution grid and the second power distribution grid.

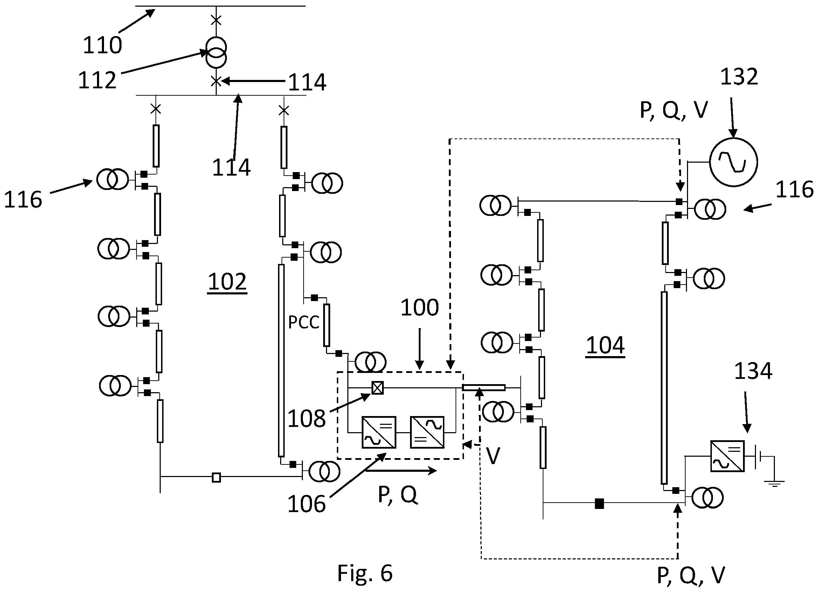

Fig. 6 illustrates another possible implementation where the downstream power distribution grid 104 is a remote power distribution grid 104. The remote power distribution grid 104 comprises multiple distributed power generators 132, 134. The voltage link arrangement 100 when operative in the second mode provides for power balancing of the power distribution grids 102, 104. Further, the variable power production often caused by distributed power generators 132, 134 alters the power flow in the power distribution grids 102, 104 which affects the voltage profile. Without presence of a separate network controller in the remote power distribution grid 104, the MVDC-link control unit 120 is operative to coordinate with controllers of the distributed power generators 132, 134 to ensure power quality and enhanced operation. In other words, the MVDC-link may synchronize the active power (P), the re-active power (Q), and the voltage magnitude (V) of the voltages in the power distribution grids 102, 104.

For example, if the voltage link arrangement 100 is in the third mode, e.g. the island mode, and this is a planned island mode, and the voltage link arrangement is about to switch to the first mode, then the MVDC-link control unit 120 may acquire operation information related to at least one of active (P) and re-active (Q) power, and the voltage (V) of the distributed power generators 132, 134 and operate in the second mode to provide a smooth resynchronization process with voltage and phase matching. In semi-island mode, asynchronous connection can be achieved with fixed P, Q, i.e. with a fixed amount of active power and reactive power flow between the two grids. The power flow through the breaker depends on the power requirement of the downstream grid. Further, the MVDC-link may control the voltage and frequency for the downstream grid. Thus, if the power demand and/or supply for the downstream grid changes, the MVDC-link may alter the power flow between the grids accordingly.

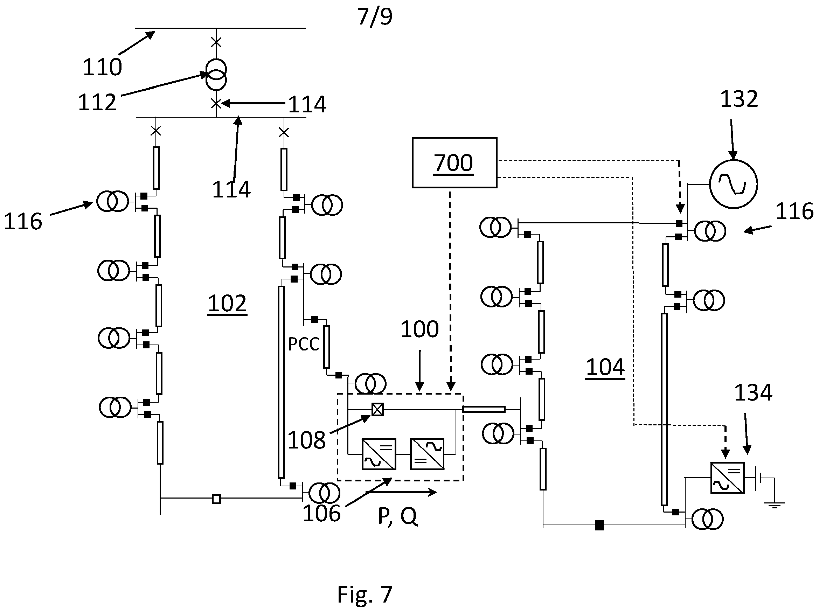

Fig. 7 illustrates yet another possible implementation where the downstream power distribution grid 104 is an active remote power distribution grid 104. The remote power distribution grid 104 comprises multiple distributed power generators 132, 134, and a grid controller 700. In this case, the MVDC-link control unit 120 may communicate with the grid controller 700 to coordinate switching operations between different modes but also coordinate P, and Q , and V with the grid controller 700.

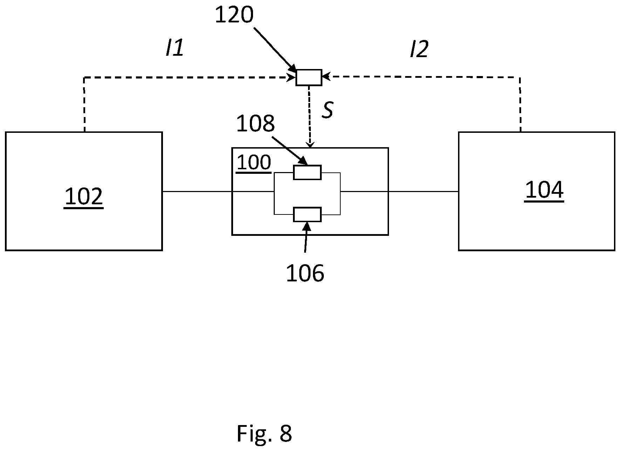

Fig. 8 is a box diagram of example embodiments of the present disclosure. Fig. conceptually illustrates a control unit 102 configured to control a voltage link arrangement 100 connectable between power distribution grids 102, 104 to operate in one of at least three modes. The voltage link arrangement 100 comprising: a medium-voltage direct current (MVDC) link 106 connectable to a first power distribution grid 102 and a second power distribution grid 104, and a breaker 108 arranged in parallel with the MVDC-link 106 and connectable to the first power distribution grid 102 and the second power distribution grid 104. The control unit 120 is configured to receive operation information I1, I2 indicating operation status of at least one of the first power distribution grid 102 and the second power distribution grid 104, and to control the voltage link to operate in one of at least three modes based on the received operation information. A first mode where the breaker 108 is closed. A second mode where the MVDC-link 106 is closed and the breaker is open 108. A third mode where the breaker 108 and the MVDC-link 106 are open.

The control unit 120 in fig. 8 is illustrated as being separate from the voltage link arrangement according to possible implementations of the present invention. In preferred embodiments, the control unit 120 is comprised in the MVDC-link 106, as illustrated in fig. 3.

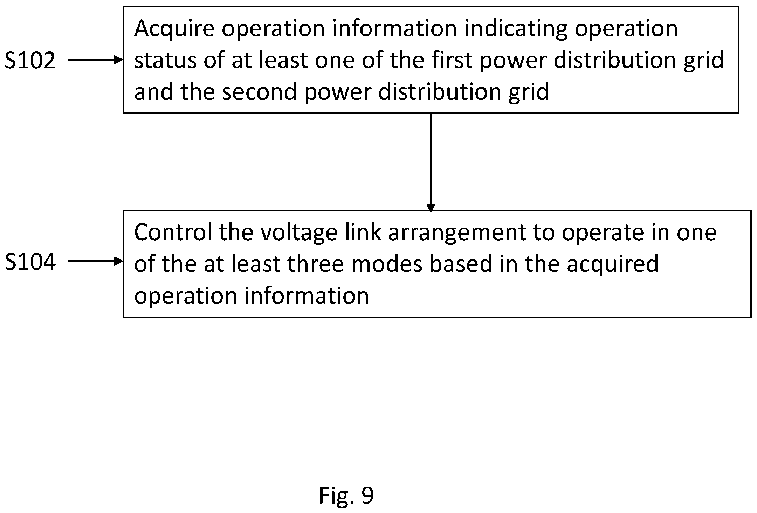

Fig. 9 is a flow-chart of method steps according to embodiments of the present invention. The flow chart includes steps for a method for controlling a voltage link arrangement 100 connected between power distribution grids to operate in one of at least three modes. The voltage link arrangement comprising: a medium-voltage direct current (MVDC) link connectable to a first power distribution grid and a second power distribution grid, and a breaker arranged in parallel with the MVDC-link and connectable to the first power distribution grid and the second power distribution grid. In a first step S102 of the method, acquiring operation information indicating operation status of at least one of the first power distribution grid and the second power distribution grid. Subsequently, in step S104, controlling the voltage link arrangement to operate in one of the at least three modes based in the acquired operation information.

As is understood, two power distributions grids, e.g. the first power distribution grid and the second power distribution grid may be connected by two or more voltage link arrangements. Further, it is understood that a voltage link arrangement may comprises at least one medium-voltage direct current (MVDC) link, in other words, a voltage link arrangement may include two or more MVDC-links in parallel and/or in series electrical connection.

In addition, although embodiments herein describe a voltage link arrangement connected between a first power distribution grid and a second power distribution grid, there may further be additional voltage link arrangements for connecting the first power distribution grid to additional power distribution grids. For example, a second voltage link arrangement may be included for connecting the first power distribution grid to a third power distribution grid.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

Even though the invention has been described with reference to specific exemplifying embodiments thereof, many different alterations, modifications and the like will become apparent for those skilled in the art.

## Claims

1. A voltage link arrangement (100) connectable between power distribution grids (102, 104), the voltage link arrangement (100) comprising:
a medium-voltage direct current, MVDC, link (106) connectable to a first power distribution grid (102) and to a second power distribution grid (104), and
a breaker (108) arranged in parallel with the MVDC-link (106) and connectable to the first power distribution grid (102) and to the second power distribution grid (104),
wherein the voltage link arrangement (100) is operable in at least:
a first mode where the breaker (108) is closed,
a second mode where the MVDC-link (106) is closed and the breaker (108) is open, and
a third mode where the breaker (108) and the MVDC-link (106) are open,
wherein the voltage link arrangement (100) is responsive to switch between modes based on operation information indicating operation status of at least one of the first power distribution grid (102) and the second power distribution grid (104),
wherein a switching operation of the voltage link arrangement (100) from one of the first mode and the third mode, to the other one of the first mode and the third mode, is performed via the second mode,
wherein the voltage link arrangement (100) is configured to be maintained in the second mode for a time duration, T, before completing the switching operation from the one of the first mode and the third mode, to the other one of the first mode and the third mode.

2. The voltage link arrangement (100) according to claim 1, wherein the time duration is based on operation information for the at least one of the first power distribution grid (102) and the second power distribution grid (104).

3. The voltage link arrangement (100) according to any one of the preceding claims, wherein the voltage link arrangement (100) is configured to operate in the third mode in response to operation information indicating a fault in one of the first power distribution grid (102) and the second power distribution grid (104).

4. The voltage link arrangement (100) according to any one of the preceding claims, wherein the voltage link arrangement (100) is configured to operate in the second mode in response to operation information indicating that one of the first power distribution grid (102) and the second power distribution grid (104) requests re-energization from the other one of the first power distribution grid (102) and the second power distribution grid (104).

5. The voltage link arrangement (100) according to any one of the preceding claims, wherein the MVDC-link (106) comprises a least two power converters (118a, 118b).

6. The voltage link arrangement (100) according to any one of the preceding claims, wherein the MVDC-link (106) is operable to control the voltage link arrangement (100) to switch between modes.

7. The voltage link arrangement (100) according to any one of the preceding claims, wherein the MVDC-link (106) includes a control unit (120) configured to receive the operation information and based on the operation information, control the voltage link arrangement to operate in one of the modes.

8. The voltage link arrangement (100) according to any one of the preceding claims, wherein, in the second mode, the MVDC-link (106) is configured to transfer at least one of active power and reactive power.

9. A control unit (120) configured to control a voltage link arrangement (100) connectable between power distribution grids to operate in one of at least three modes, the voltage link arrangement comprising:
a medium-voltage direct current, MVDC, link (106) connectable to a first power distribution grid (102) and a second power distribution grid (104), and
a breaker (108) arranged in parallel with the MVDC-link (106) and connectable to the first power distribution grid (102) and the second power distribution grid (104),
wherein the control unit (120) is configured to receive operation information indicating operation status of at least one of the first power distribution grid (102) and the second power distribution grid (104), and to control the voltage link to operate in one of:
a first mode where the breaker (108) is closed,
a second mode where the MVDC-link (106) is closed and the breaker (108) is open, and
a third mode where the breaker (108) and the MVDC-link (106) are open,
based on the received operation information, wherein the control unit (120) is configured to control the voltage link arrangement (106) to switch from one of the first mode and the third mode, to the other one of the first mode and the third mode, via the second mode,
wherein the control unit (120) is configured to maintain the voltage link arrangement (100) in the second mode for a time duration.

10. A method for controlling a voltage link arrangement (100) connected between power distribution grids to operate in one of at least three modes, the voltage link arrangement (100) comprising:
a medium-voltage direct current, MVDC, link (106) connectable to a first power distribution grid (102) and a second power distribution grid (104), and
a breaker (108) arranged in parallel with the MVDC-link (106) and connectable to the first power distribution grid (102) and the second power distribution grid (104),
the method comprising:
acquiring (S102) operation information indicating operation status of at least one of the first power distribution grid (102) and the second power distribution grid (104),
controlling (S104) the voltage link arrangement (100) to operate in one of the at least three modes based in the acquired operation information,
switching from one of the first mode and the third mode, to the other one of the first mode and the third mode, via the second mode, and
maintaining the voltage link arrangement (100) in the second mode for a time duration.

## Patentansprüche

1. Spannungsverbindungsanordnung (100), die zwischen Stromverteilungsnetzen (102, 104) angeschlossen werden kann, wobei die Spannungsverbindungsanordnung (100) Folgendes umfasst:
eine Mittelspannungs-Gleichstrom-(MVDC)-Verbindung (106), die an ein erstes Stromverteilungsnetz (102) und an ein zweites Stromverteilungsnetz (104) angeschlossen werden kann, und
einen Unterbrecher (108), der parallel zur MVDC-Verbindung (106) angeordnet ist und an das erste Stromverteilungsnetz (102) und an das zweite Stromverteilungsnetz (104) angeschlossen werden kann,
wobei die Spannungsverbindungsanordnung (100) in mindestens einer der folgenden Betriebsarten betrieben werden kann:
einer ersten Betriebsart, in der der Unterbrecher (108) geschlossen ist,
einer zweiten Betriebsart, in der die MVDC-Verbindung (106) geschlossen und der Unterbrecher (108) geöffnet ist, und
einer dritten Betriebsart, in der der Unterbrecher (108) und die MVDC-Verbindung (106) offen sind, wobei die Spannungsverbindungsanordnung (100) darauf anspricht, zwischen den Betriebsarten zu wechseln, basierend auf Betriebsinformationen, die den Betriebsstatus von mindestens einem von dem ersten Stromverteilungsnetz (102) und dem zweiten Stromverteilungsnetz (104) anzeigen,
wobei ein Schaltvorgang der Spannungsverbindungsanordnung (100) von einer der ersten Betriebsart und der dritten Betriebsart zu der anderen der ersten Betriebsart und der dritten Betriebsart über die zweite Betriebsart durchgeführt wird,
wobei die Spannungsverbindungsanordnung (100) so konfiguriert ist, dass sie für eine Zeitdauer T in der zweiten Betriebsart gehalten wird, bevor der Schaltvorgang von der einen der ersten Betriebsart und der dritten Betriebsart in die andere der ersten Betriebsart und der dritten Betriebsart abgeschlossen wird.

2. Spannungsverbindungsanordnung (100) nach Anspruch 1, wobei die Zeitdauer auf Betriebsinformationen für das erste Stromverteilungsnetz (102) und/oder das zweite Stromverteilungsnetz (104) basiert.

3. Spannungsverbindungsanordnung (100) nach einem der vorhergehenden Ansprüche, wobei die Spannungsverbindungsanordnung (100) so konfiguriert ist, dass sie als Reaktion auf eine Betriebsinformation, die einen Fehler in einem des ersten Stromverteilungsnetzes (102) und des zweiten Stromverteilungsnetzes (104) anzeigt, in der dritten Betriebsart arbeitet.

4. Spannungsverbindungsanordnung (100) nach einem der vorhergehenden Ansprüche, wobei die Spannungsverbindungsanordnung (100) so konfiguriert ist, dass sie als Reaktion auf eine Betriebsinformation, die anzeigt, dass eines von dem ersten Stromverteilungsnetz (102) und dem zweiten Stromverteilungsnetz (104) eine Wiedererregung von dem anderen von dem ersten Stromverteilungsnetz (102) und dem zweiten Stromverteilungsnetz (104) anfordert, in der zweiten Betriebsart arbeitet.

5. Spannungsverbindungsanordnung (100) nach einem der vorhergehenden Ansprüche, wobei die MVDC-Verbindung (106) mindestens zwei Leistungswandler (118a, 118b) umfasst.

6. Spannungsverbindungsanordnung (100) nach einem der vorhergehenden Ansprüche, wobei die MVDC-Verbindung (106) so betrieben werden kann, dass sie die Spannungsverbindungsanordnung (100) so steuert, dass sie zwischen den Betriebsarten umschaltet.

7. Spannungsverbindungsanordnung (100) nach einem der vorhergehenden Ansprüche, wobei die MVDC-Verbindung (106) eine Steuereinheit (120) aufweist, die so konfiguriert ist, dass sie die Betriebsinformationen empfängt und basierend auf den Betriebsinformationen die Spannungsverbindungsanordnung so steuert, dass sie in einer der Betriebsarten arbeitet.

8. Spannungsverbindungsanordnung (100) nach einem der vorhergehenden Ansprüche, wobei die MVDC-Verbindung (106) in der zweiten Betriebsart so konfiguriert ist, dass sie Wirkleistung und/oder Blindleistung überträgt.

9. Steuereinheit (120), die so konfiguriert ist, dass sie eine Spannungsverbindungsanordnung (100), die zwischen Stromverteilungsnetzen angeschlossen werden kann, so steuert, dass sie in einer von mindestens drei Betriebsarten arbeitet, wobei die Spannungsverbindungsanordnung Folgendes umfasst:
eine Mittelspannungs-Gleichstrom-(MVDC)-Verbindung (106), die an ein erstes Stromverteilungsnetz (102) und an ein zweites Stromverteilungsnetz (104) angeschlossen werden kann, und
einen Unterbrecher (108), der parallel zur MVDC-Verbindung (106) angeordnet ist und an das erste Stromverteilungsnetz (102) und das zweite Stromverteilungsnetz (104) angeschlossen werden kann,
wobei die Steuereinheit (120) so konfiguriert ist, dass sie Betriebsinformationen empfängt, die den Betriebszustand des ersten Stromverteilungsnetzes (102) und/oder des zweiten Stromverteilungsnetzes (104) angeben, und dass sie die Spannungsverbindung so steuert, dass sie in einer der folgenden Betriebsarten arbeitet:
einer ersten Betriebsart, in der der Unterbrecher (108) geschlossen ist,
einer zweiten Betriebsart, in der die MVDC-Verbindung (106) geschlossen und der Unterbrecher (108) geöffnet ist, und
einer dritten Betriebsart, in der der Unterbrecher (108) und die MVDC-Verbindung (106) offen sind, basierend auf der empfangenen Betriebsinformation, wobei die Steuereinheit (120) so konfiguriert ist, dass sie die Spannungsverbindungsanordnung (106) so steuert, dass sie von einer der ersten Betriebsart und der dritten Betriebsart über die zweite Betriebsart in die andere der ersten Betriebsart und der dritten Betriebsart schaltet, wobei die Steuereinheit (120) so konfiguriert ist, dass sie die Spannungsverbindungsanordnung (100) für eine bestimmte Zeitdauer in der zweiten Betriebsart hält.

10. Verfahren zur Steuerung einer Spannungsverbindungsanordnung (100), die zwischen Stromverteilungsnetzen angeschlossen ist, um in einer von mindestens drei Betriebsarten zu arbeiten, wobei die Spannungsverbindungsanordnung (100) Folgendes umfasst:
eine Mittelspannungs-Gleichstrom-(MVDC)-Verbindung (106), die an ein erstes Stromverteilungsnetz (102) und an ein zweites Stromverteilungsnetz (104) angeschlossen werden kann, und
einen Unterbrecher (108), der parallel zur MVDC-Verbindung (106) angeordnet ist und an das erste Stromverteilungsnetz (102) und das zweite Stromverteilungsnetz (104) angeschlossen werden kann, wobei das Verfahren Folgendes umfasst:
Erfassen (S102) von Betriebsinformationen, die den Betriebszustand des ersten Stromverteilungsnetzes (102) und/oder des zweiten Stromverteilungsnetzes (104) angeben,
Steuern (S104) der Spannungsverbindungsanordnung (100) zum Betrieb in einer der mindestens drei Betriebsarten basierend auf der erfassten Betriebsinformation,
Umschalten von einer der beiden Betriebsarten, der ersten Betriebsart und der dritten Betriebsart, auf die andere der beiden Betriebsarten, der ersten Betriebsart und der dritten Betriebsart, über die zweite Betriebsart, und Aufrechterhalten der Spannungsverbindungsanordnung (100) in der zweiten Betriebsart für eine bestimmte Zeitdauer.

## Revendications

1. Agencement de liaison de tension (100) pouvant être connecté entre des réseaux de distribution d'électricité (102, 104), l'agencement de liaison de tension (100) comprenant :
une liaison de courant continu moyenne tension (106) pouvant être connectée à un premier réseau de distribution d'électricité (102) et à un deuxième réseau de distribution d'électricité (104), et
un disjoncteur (108) disposé en parallèle avec la liaison MVDC (106) et pouvant être connecté au premier réseau de distribution d'électricité (102) et au deuxième réseau de distribution d'électricité (104),
dans lequel l'agencement de liaison de tension (100) peut fonctionner dans au moins :
un premier mode dans lequel le disjoncteur (108) est fermé,
un deuxième mode dans lequel la liaison MVDC (106) est fermée et le disjoncteur (108) est ouvert, et
un troisième mode dans lequel le disjoncteur (108) et la liaison MVDC (106) sont ouverts, dans lequel l'agencement de liaison de tension (100) peut passer d'un mode à l'autre sur la base d'informations de fonctionnement indiquant l'état de fonctionnement d'au moins l'un du premier réseau de distribution d'électricité (102) et du deuxième réseau de distribution d'électricité(104),
dans lequel une opération de commutation de l'agencement de liaison de tension (100) de l'un du premier mode et du troisième mode, à l'autre du premier mode et du troisième mode, est effectuée par l'intermédiaire du deuxième mode,
dans lequel l'agencement de liaison de tension (100) est configuré pour être maintenu dans le deuxième mode pendant une durée T avant de terminer l'opération de commutation de l'un du premier mode et du troisième mode à l'autre du premier mode et du troisième mode.

2. Agencement de liaison de tension (100) selon la revendication 1, dans lequel la durée est basée sur des informations de fonctionnement pour l'au moins un du premier réseau de distribution d'électricité (102) et du deuxième réseau de distribution d'électricité (104).

3. Agencement de liaison de tension (100) selon l'une quelconque des revendications précédentes, dans lequel l'agencement de liaison de tension (100) est configuré pour fonctionner dans le troisième mode en réponse à des informations de fonctionnement indiquant un défaut dans l'un du premier réseau de distribution d'électricité (102) et du deuxième réseau de distribution d'électricité (104) .

4. Agencement de liaison de tension (100) selon l'une quelconque des revendications précédentes, dans lequel l'agencement de liaison de tension (100) est configuré pour fonctionner dans le deuxième mode en réponse à des informations de fonctionnement indiquant que l'un du premier réseau de distribution d'électricité (102) et du deuxième réseau de distribution d'électricité (104) demande une remise sous tension depuis l'autre réseau parmi le premier réseau de distribution d'électricité (102) et le deuxième réseau de distribution d'électricité (104) .

5. Agencement de liaison de tension (100) selon l'une quelconque des revendications précédentes, dans lequel la liaison MVDC (106) comprend au moins deux convertisseurs de puissance (118a, 118b).

6. Agencement de liaison de tension (100) selon l'une quelconque des revendications précédentes, dans lequel la liaison MVDC (106) est apte à commander l'agencement de liaison de tension (100) pour passer d'un mode à l'autre.

7. Agencement de liaison de tension (100) selon l'une quelconque des revendications précédentes, dans lequel la liaison MVDC (106) comprend une unité de commande (120) configurée pour recevoir les informations de fonctionnement et, sur la base des informations de fonctionnement, commander l'agencement de liaison de tension pour fonctionner dans l'un des modes.

8. Agencement de liaison de tension (100) selon l'une quelconque des revendications précédentes, dans lequel, dans le deuxième mode, la liaison MVDC (106) est configurée pour transférer au moins l'une de la puissance active et de la puissance réactive.

9. Unité de commande (120) configurée pour commander un agencement de liaison de tension (100) pouvant être connecté entre des réseaux de distribution d'électricité pour fonctionner dans l'un d'au moins trois modes, l'agencement de liaison de tension comprenant :
une liaison de courant continu moyenne tension (106) pouvant être connectée à un premier réseau de distribution d'électricité (102) et à un deuxième réseau de distribution d'électricité (104), et
un disjoncteur (108) disposé en parallèle avec la liaison MVDC (106) et pouvant être connecté au premier réseau de distribution d'électricité (102) et au deuxième réseau de distribution d'électricité (104),
dans laquelle l'unité de commande (120) est configurée pour recevoir des informations de fonctionnement indiquant l'état de fonctionnement d'au moins un du premier réseau de distribution d'électricité (102) et du deuxième réseau de distribution d'électricité (104), et pour commander la liaison de tension afin qu'elle fonctionne dans l'un des modes suivants :
un premier mode dans lequel le disjoncteur (108) est fermé,
un deuxième mode dans lequel la liaison MVDC (106) est fermée et le disjoncteur (108) est ouvert, et
un troisième mode dans lequel le disjoncteur (108) et la liaison MVDC (106) sont ouverts, sur la base des informations de fonctionnement reçues, l'unité de commande (120) étant configurée pour commander l'agencement de liaison de tension (106) afin de passer de l'un du premier mode et du troisième mode à l'autre du premier mode et du troisième mode, par l'intermédiaire du deuxième mode,
l'unité de commande (120) étant configurée pour maintenir l'agencement de liaison de tension (100) dans le deuxième mode pendant une certaine durée.

10. Procédé de commande d'un agencement de liaison de tension (100) connecté entre des réseaux de distribution d'électricité pour fonctionner dans l'un d'au moins trois modes, l'agencement de liaison de tension (100) comprenant :
une liaison de courant continu moyenne tension (106) pouvant être connectée à un premier réseau de distribution d'électricité (102) et à un deuxième réseau de distribution d'électricité (104), et
un disjoncteur (108) disposé en parallèle avec la liaison MVDC (106) et pouvant être connecté au premier réseau de distribution d'électricité (102) et au deuxième réseau de distribution d'électricité (104), le procédé comprenant les étapes suivantes :
acquérir (S102) des informations de fonctionnement indiquant l'état de fonctionnement d'au moins l'un du premier réseau de distribution d'électricité (102) et du deuxième réseau de distribution d'électricité (104),
commander (S104) l'agencement de liaison de tension (100) pour qu'il fonctionne dans l'un des au moins trois modes, sur la base des informations de fonctionnement acquises, passer de l'un du premier mode et du troisième mode à l'autre du premier mode et du troisième mode, par l'intermédiaire du deuxième mode, et
maintenir l'agencement de liaison de tension (100) dans le deuxième mode pendant une certaine durée.
